# EUROPÄISCHE PATENTANMELDUNG

(11) **EP 2 060 174 A1**
(43) Veröffentlichungstag der Anmeldung: **20.05.2009**
(21) Anmeldenummer: 08019319.6
(22) Anmeldetag: 05.11.2008
(51) Int. Cl.: A01K 27/00

(54) **Leuchtbandanordnung für Menschen, Tiere oder Gegenstände, insbesondere Leuchthalsband für Hunde**

(30) Priorität: 16.11.2007 DE 102007055093
(71) Anmelder: Majerka, Stephan, 85354 Freising (DE); Von Prittwitz und Gaffron, Berndt, 80799 München (DE)
(72) Erfinder: Majerka, Stephan, 85354 Freising (DE); Von Prittwitz und Gaffron, Berndt, 80799 München (DE)
(74) Vertreter: von Puttkamer, Nikolaus

(57) **Zusammenfassung**

Die Erfindung betrifft eine Leuchtbandanordnung für Menschen, Tiere oder Gegenstände, insbesondere ein Leuchthalsband für Hunde, mit einem schlauchförmigen Leuchtbandteil (2) und mit in dem Leuchtbandteil (2) enthaltenden Leuchtelementen (13), die über ein Kabel (15) miteinander elektrisch verbunden sind. Die Anschlusselemente (20) der Leuchtelemente (13) sind derart in das Kabel (15) eingesteckt, dass sie Leiter (22) des Kabels (15) durchdringen und kontaktieren. Das Kabel (15) und die damit verbundenen Leuchtelemente (13) sind derart in einem Schrumpfschlauch (11) angeordnet, dass die Leuchtelemente (13) im geschrumpften Zustand des Schrumpfschlauches (11) am Kabel (15) und die Anschlusselemente (20) der Leuchtelemente (13) in einem elektrischen Kontakt zu den Leitern (22) gehalten werden.

## Beschreibung

Die vorliegende Erfindung betrifft eine Leuchtbandanordnung, insbesondere ein Leuchthalsband für Hunde, nach dem Oberbegriff des Patentanspruches 1.

Ein derartiges Leuchthalsband für Hunde geht aus der DE 203 18 106 U1 hervor. Dabei weist das Leuchthalsband ein schlauchförmiges Leuchtbandteil und ein mit dem Leuchtbandteil verbindbares, wenigstens eine Energieversorgungsquelle enthaltendes Schlauchteil auf. In dem Leuchtbandteil sind über ein Flachbandkabel miteinander elektrisch verbundene Leuchtelemente, vorzugsweise LED's, angeordnet. Ferner sind Steckverbindungsteile vorgesehen, über die elektrische Verbindungen zwischen der Energieversorgungsquelle und dem Flachbandkabel beim Verbinden des Schlauchteiles mit dem Leuchtbandteil herstellbar sind. Die Verbindung zwischen den LED's und dem Flachbandkabel erfolgt durch eine Steck/Biege-Technik.

Die Aufgabe der vorliegenden Erfindung besteht darin, eine Leuchtbandanordnung zu beschaffen, bei der eine besonders einfache und sichere Verbindung der Leuchtelemente mit dem Kabel möglich ist.

Diese Aufgabe wird durch eine Leuchtbandanordnung mit den Merkmalen des Patentanspruches 1 gelöst.

Der wesentliche Vorteil der vorliegenden Erfindung besteht darin, dass eine besonders einfache Verbindung der Leuchtelemente, insbesondere von LED's mit dem Kabel, insbesondere einem Flachbandkabel, dadurch ermöglicht wird, dass die Anschlusselemente bzw. Anschlussbeinchen der LED's in in einer einfachen Weise in das Flachbandkabel so eingedrückt werden, dass sie die entsprechenden Leiter des Flachbandkabels durchdringen. Nachfolgend werden die über das Flachbandkabel hinausragenden Bereiche der Anschlusselemente vorzugsweise in einer einfachen Weise verkürzt und wird das Flachbandkabel mit den LED's in einen Schrumpfschlauch eingeschoben. Nach dem Schrumpfen des Schrumpfschlauches hält dieser die LED's am Flachbandkabel fest, wobei eine sichere Kontaktgabe zwischen den Leitern des Flachbandkabels und den Anschlusselementen der LED's gewährleistet wird. Aufwendige Befestigungsoperationen, bei denen die Anschlusselemente mit den Leitern des Flachbandkabels z.B. verlötet werden oder die durch das Flachbandkabel hindurch tretenden Bereiche der Anschlusselemente umgebogen werden, sind daher nicht erforderlich. Die Herstellung der erfindungsgemäßen Leuchtanordnung wird daher wesentlich vereinfacht und kostengünstiger, wobei eine sichere Kontaktgabe zwischen den Leitern des Flachbandkabels an den Anschlusselementen der Leuchtelemente gewährleistet ist.

Im folgenden werden die Erfindungen deren Ausgestaltungen im Zusammenhang mit den Figuren näher erläutert. Es zeigen:
Figur 1 in schematischer Darstellung ein vorliegendes Hundehalsband;
Figur 2 eine vergrößerte Darstellung eines von der Seite her gesehenen Befestigungsbereiches eines Leuchtelementes an dem im Schlauchteil enthaltenden Kabel; und
Figur 3 einen Schnitt entlang der Linie II-II durch die Anordnung der Figur 2.

Die vorliegende Leuchtbandanordnung 1 besteht im wesentlichen aus einem schlauchförmigen Leuchtbandteil 2, in dem Leuchtbandteil 2 enthaltenen Leuchtelementen, bei denen es sich vorzugsweise um Leuchtdioden 13 (LED's) handelt, einem Schlauchteil 10, einer in dem Schlauchteil 10 enthaltenen Energieversorgungsquelle 4, die vorzugsweise durch wenigstens eine Batterie gebildet wird, und Steckverbindungsteilen 6, 7 zum Verbinden des Schlauchteiles 10 mit den Enden des schlauchförmigen Leuchtbandteiles 2.

In der dargestellten Weise sind in dem Schlauchteil 10 vorzugsweise zwei in Reihe geschaltete Batterien 4, 4 angeordnet. Es ist jedoch auch denkbar, in dem Schlauchteil 10 nur eine oder mehr als zwei Batterien vorzusehen. Vorzugsweise werden Batterien vom Typ LR1 Ladyzellen verwendet. Als Leuchtdioden 13 werden vorzugsweise LED's vom Typ Superflux verwendet. An der Stelle der genannten LED's 13 können jedochsauch andere Leuchtelemente vorgesehen sein. Das Schlauchteil 10 und das Leuchtbandteil 2 werden vorzugsweise jeweils durch ein Stück eines Silikonschlauches gebildet, der beispielsweise einen Innendurchmesser von etwa 10 mm, einen Außendurchmesser von etwa 15 mm und eine Wandstärke von etwa 2,5 mm besitzt.

Jedes Ende des schlauchförmigen Leuchtbandteiles 2 ist durch ein stopfenförmiges Steckverbindungsteil 7 bzw. 8 verschlossen, das dicht in das jeweilige Ende eingesetzt, vorzugsweise in diesem verklebt ist. Insbesondere wird zum Verkleben ein Weichplastikkleber verwendet. An der dem Schlauchteil 10 zugewandten Seite weist jedes Steckverbindungsteil 6, 7 ein Kontaktteil 8 bzw. 9 zur Kontaktierung der Batterie 4,4 des Schlauchteiles 10 auf, wenn die stopfenförmigen Steckverbindungsteile 6, 7 in die jeweiligen Enden des Schlauchteiles 10 zur Herstellung einer dichten Verbindung zwischen dem Schlauchteil 10 und dem schlauchförmigen Leuchtbandteil 2 eingesteckt werden. Vorzugsweise besitzen die Kontaktteile 8, 9 die Form von Kontakt- bzw. Druckfedern, die an den entsprechenden Polen der Batterien 4 zur Anlage gelangen. Die Steckverbindungsteile 6, 7 bestehen vorzugsweise jeweils aus einem PVC-Schlauchteil mit einem Innendurchmesser von etwa 6mm, einem Außendurchmesser von etwa 11mm und einer Wandstärke von etwa 2,5mm.

Im Inneren des schlauchförmigen Leuchtbandteiles 2 befinden sich vorzugsweise gleichmäßig voneinander beabstandet mehrere LED's 13, die über ein Kabel 15 elektrisch verbunden sind. Dabei handelt es sich vorzugsweise bei dem Kabel 15 um ein ultraflaches, flexibles Kabel, das auf einem ringförmigen Trägerteil 14 , vorzugsweise einem Kabelbinder, befestigt sein kann, insbesondere verklebt ist. Der Kabelbinder 14 besteht vorzugsweise aus PVC.

Das Flachbandkabel 15 ist mit einem Ende 15-2 in das Steckverbindungsteil 7 eingeführt, in dem es mit dem Kontaktteil 9 elektrisch in Verbindung steht. In entsprechender Weise ist das Flachbandkabel 15 mit seinem anderen Ende 15-1 in das Steckverbindungsteil 6 eingeführt, in dem es mit dem Kontaktteil 8 elektrisch verbunden ist.

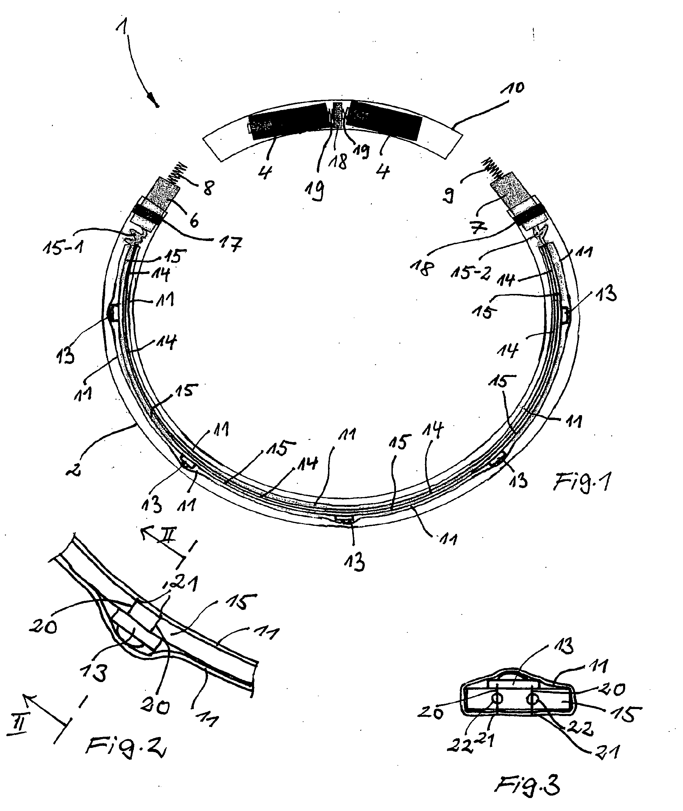

Es wird nun im Zusammenhang mit den Figuren 2 und 3 die Art der Verbindung der LED's 13 mit dem Flachbandkabel 15 näher erläutert. Bei der Fertigung werden die LED's 13 mit ihren etwa stiftförmigen Anschlusselementen 20 voran so in das Flachbandkabel 15 eingesteckt, dass die Anschlusselemente 20 die entsprechenden Leiter 21 des Flachbandkabels 15 durchdringen, wie dies die Figur 3 zeigt. Die über das Flachbandkabel 15 überstehenden Bereiche 21 der die Leiter 22 durchdringenden Anschlusselemente 20 der LED's 13 werden auf eine vorbestimmte Länge verkürzt, vorzugsweise einfach abgeschnitten. Die so hergestellte Einheit aus dem Flachbandkabel 15 und den LED's 13 wird in einen transparenten Schrumpfschlauch 11 eingeschoben. Daraufhin wird dieser erwärmt und zum Schrumpfen gebracht. Die Innenwandungen des Schrumpfschlauches 11 legen sich dann fest an das Flachbandkabel 15 und an die LED's 13 an, wobei diese am Flachbandkabel 15 festgehalten werden und eine sichere Kontaktgabe zwischen den Anschlusselementen 20 und den Leitern 22 herstellt und dauerhaft aufrechterhalten wird. Von Bedeutung ist es dabei, dass der geschrumpfte Schrumpfschlauch 11 von beiden Seiten her einen relativ großen Druck auf das Flachbandkabel 15 und die LED's 13 ausübt, sodass sich die Anschlusselemente 20 nicht aus dem Kontakt zu den Leitern 21 lösen können.

Der so hergestellte Schrumpfschlauchverbund, der auch das in den Figuren 2 und 3 der Einfachheit halber nicht dargestellte Trägerteil 14 umfassen kann, wird anschließend in das Leuchtbandteil 2 eingeführt und die Kontaktteile 8, 9 werden mit den Enden des Leuchtbandkabels 15 elektrisch verbunden, vorzugsweise verlötet. Bei Bedarf kann noch ein nicht näher dargestellter Vorwiderstand vorgeschaltet werden. Die Kontaktteile 8, 9 werden dann in die Steckverbindungsteile 6, 7 vorzugsweise unter Verwendung einer Heißklebepistole dicht eingeklebt. Die Steckverbindungsteile 6, 7 werden dann, wie bereits erwähnt, in den Enden des Leuchtbandteiles 2 dicht verklebt. Vorzugsweise besteht der Schrumpfschlauch 11 aus einem transparenten, phosphorisierenden Material oder aus einem sonstigen durch Licht zum Leuchten anregbaren Material.

In das Schlauchteil 10 wird bei der Verwendung von beispielsweise zwei Batterien 4, 4 etwa mittig ein Kontaktelement 18 eingebracht, das die elektrische Verbindung zwischen den ihm zugewandten Polen der Batterien 4 herstellt. Das Kontaktelement 18 umfasst vorzugsweise ein den Querschnitt des Schlauchteiles 10 überbrückendes scheibenförmiges Teil, das eine Bohrung zur Aufnahme einer die elektrische Verbindung herstellenden Feder 19 aufweist.

Wenn das Schlauchteil 10 mit dem Leuchtbandteil 2 verbunden wird, werden die entsprechenden Kontakte zu den Batterien 4, 4 des Schlauchteiles 10 automatisch hergestellt und die LED's 13 fangen sofort zu leuchten an. Wenn die Verbindung zwischen dem Schlauchteil 10 und einer Seite des Leuchtbandteiles 2 wieder unterbrochen wird, wobei das entsprechende Ende des Schlauchsteiles 10 von dem entsprechenden stopfenförmigen Verbindungsteil 6 bzw. 7 abgezogen wird, wird der Stromkreis unterbrochen und die Leuchtdioden 13 werden ausgeschaltet.

Insbesondere wird die vorliegende schlauchförmige Leuchtbandanordnung als Hundehalsband verwendet, um dem Besitzer eines Hundes bei Nacht anzuzeigen, wo sich sein Hund gerade befindet. Es ist jedoch auch denkbar, die vorliegende Leuchtbandanordnung zur Kennzeichnung von anderen Tieren und auch von Menschen zu verwenden. Insbesondere kann es an den Armen und Beinen eines Menschen, beispielsweise von Rollschuh- bzw. Inliner-Fahrern, von Radfahrern oder Fußgängern zur Erhöhung der Sicherheit im Verkehr getragen werden.

Die Steckverbindungsteile 6, 7 können Markierungen 16, 17 aufweisen, die eine einfache Verbindung mit den richtigen Batteriepolen ermöglichen. Beispielsweise bestehen die Markierungen 16, 17 aus z.B. schwarz bzw. kupferfarbenen Ringen aus PVC-Folie.

## Patentansprüche

1. Leuchtbandanordnung für Menschen, Tiere oder Gegenstände, insbesondere Leuchthalsband für Hunde, mit einem schlauchförmigen Leuchtbandteil (2) und mit in dem Leuchtbandteil (2) enthaltenden Leuchtelementen (13), die über ein Kabel (15) miteinander elektrisch verbunden sind, **dadurch gekennzeichnet, dass** die Anschlusselemente (20) der Leuchtelemente (13) in das Kabel (15) derart eingesteckt sind, das sie Leiter (22) des Kabels (15) durchdringen und kontaktieren, und dass das Kabel (15) und die damit verbundenen Leuchtelemente (13) in einem Schrumpfschlauch (11) angeordnet sind, derart, dass die Leuchtelemente (13) im geschrumpften Zustand des Schrumpfschlauches (11) am Kabel (15) und die Anschlusselemente (20) der Leuchtelemente (13) in einem elektrischen Kontakt zu den Leitern (22) gehalten werden.

2. Leuchtbandanordnung nach Anspruch 1, **dadurch gekennzeichnet, dass** das Kabel (15) ein Flachbandkabel ist.

3. Leuchtbandanordnung nach Anspruch 1 oder 2, **dadurch gekennzeichnet, dass** die Leuchtelemente (13) durch LED's gebildet sind.

4. Leuchtbandanordnung nach einem der Ansprüche 1 bis 3, **dadurch gekennzeichnet, dass** die Anschlusselemente (20) stiftförmig ausgebildet sind.

5. Leuchtbandanordnung nach einem der Ansprüche 1 bis 4, **dadurch gekennzeichnet, dass** ein mit dem Leuchtbandteil (2) beidseitig verbindbares, eine Energiequelle (4, 4) enthaltendes Schlauchteil (10) vorgesehen ist und Steckverbindungsteile (6, 7) vorgesehen sind, über die elektrische Verbindungen zwischen der Energiequelle (4, 4) und dem Kabel (15) beim Verbinden des Schlauchteiles (10) mit dem Leuchtbandteil (2) herstellbar sind.

6. Leuchtbandanordnung nach einem der Ansprüche 1 bis 6, **dadurch gekennzeichnet, dass** das schlauchförmige Leuchtbandteil (2) und/oder das Schlauchteil (10) durch einen Silikonschlauch gebildet ist.

7. Leuchtbandanordnung nach einem der Ansprüche 1 bis 7, **dadurch gekennzeichnet, dass** der Schrumpfschlauch (11) phosphorisierend ausgebildet ist.

8. Leuchtbandanordnung nach einem der Ansprüche 1 bis 7, **dadurch gekennzeichnet, dass** das Schlauchteil (10) in Reihenschaltung als Energiequelle (4, 4) wenigstens eine, vorzugsweise zwei Batterien, umfasst.

9. Leuchtbandanordnung nach einem der Ansprüche 1 bis 8,
**dadurch gekennzeichnet, dass** die Steckverbindungssteile (5, 7) die Form von Schlauchteilen besitzen, die dicht in die Enden des Leuchtbandteiles (2) eingesetzt sind.

10. Leuchtbandanordnung nach Anspruch 9, **dadurch gekennzeichnet, dass** die Schlauchteile aus PVC bestehen.

11. Leuchtbandanordnung nach Anspruch 9 oder 10, **dadurch gekennzeichnet, dass** die Enden (15-1, 15-2) des Kabels (15) mit Kontaktteilen (8, 9) elektrisch verbunden und in den Steckverbindungsteilen (6, 7) dicht angeordnet sind, wobei die Kontaktteile (8, 9) beim Verbinden des Schlauchteiles (10) mit den Steckverbindungsteilen (6, 7) die entsprechenden Seiten der Energieversorgungsquelle (4, 4) kontaktieren.

12. Leuchtbandanordnung nach Anspruch 11, **dadurch gekennzeichnet, dass** als Kontaktteile Kontakt- oder Druckfedern vorgesehen sind.

13. Leuchtbandanordnung nach Anspruch 11 oder 12, **dadurch gekennzeichnet, dass** die Kontaktteile in den Steckverbindungsteilen (6, 7) dicht verklebt sind.

14. Leuchtbandanordnung nach einem der Ansprüche 1 bis 13, **dadurch gekennzeichnet, dass das Kabel (15) auf einem** Trägerteil (14) angeordnet ist.

15. Leuchtbandanordnung nach Anspruch 14, **dadurch gekennzeichnet, dass** das Trägerteil (14) durch ein Kabelbinderteil gebildet ist, das vorzugsweise aus PVC besteht.

16. Verfahren zur Herstellung einer Leuchtbandanordnung nach einem der Ansprüche 1 bis 15, **dadurch gekennzeichnet, dass** die Leuchtelemente (13) durch die folgenden Schritte am Kabel (15) befestigt werden:
a) Stecken der Anschlusselemente (20) der Leuchtelemente (13) durch das Kabel (15) derart, dass Anschlusselemente (20) der Leuchtelemente (13) durch Leiter (22) des Kabels (15) verlaufen,
b) Einschieben des Kabels (15) mit den in das Kabel (15) eingesteckten Leuchtelementen (13) in einen Schrumpfschlauch (11), und
c) Erhitzen und Schrumpfen des Schrumpfschlauches (11) derart, dass die Leuchtelemente (13) dadurch am Kabel mechanisch fixiert werden, dass der geschrumpfte Schrumpfschlauch (11) sich fest gegen das Kabel (15) und die Leuchtelemente (13) legt.

17. Verfahren nach Anspruch 16, **dadurch gekennzeichnet, dass** die über das Kabel (15) nach dem Schritt a) vorstehenden Endbereichen der Anschlusselemente (20) vor dem Schritt b) gekürzt, vorzugsweise abgeschnitten werden.

18. Verfahren nach einem der Ansprüche 14 bis 18, **dadurch gekennzeichnete, dass** das Kabel (15) nach dem Schritt a) und vor dem Schritt b) auf einem Trägerteil (14) angeordnet wird.
